# EUROPÄISCHE PATENTANMELDUNG

(11) **EP 3 569 463 A1**
(43) Veröffentlichungstag der Anmeldung: **20.11.2019**
(21) Anmeldenummer: 19173211.4
(22) Anmeldetag: 08.05.2019
(51) Int. Cl.: B60W 40/112, B60W 30/04, B60W 50/14

(54) **VERFAHREN ZUR ERMITTLUNG EINER KIPPWAHRSCHEINLICHKEIT EINES FAHRZEUGES, AUSWERTEEINHEIT, SYSTEM UND FAHRZEUG**

(30) Priorität: 14.05.2018 DE 102018207385
(71) Anmelder: Continental Automotive GmbH, 30165 Hannover (DE)
(72) Erfinder: Dohmen, Ralf, 78050 Villingen-Schwenningen (DE); Bertl, Svenja, 78147 Vöhrenbach (DE); Langer, Roland, 58052 Villingen-Schwenningen (DE)

(57) **Zusammenfassung**

Gemäß zumindest einer Ausführungsform umfasst das Verfahren zur Ermittlung einer Kippwahrscheinlichkeit eines Fahrzeuges (1) einen Schritt A), in dem erste Messsignale, die repräsentativ für eine auf eine Achse (2) des Fahrzeuges (1) wirkende Lastverteilung sind, eingelesen werden. Weiter umfasst das Verfahren einen Schritt B), in dem zweite Messsignale, die repräsentativ für einen Neigungswinkel eines Fahrzeugaufbaus (20) des Fahrzeuges sind, eingelesen werden. In einem Schritt C) des Verfahrens wird abhängig von den ersten Messsignalen und den zweiten Messsignalen eine Kippinformation ermittelt, wobei die Kippinformation repräsentativ für eine Wahrscheinlichkeit ist, dass das Fahrzeug kippen wird.

## Beschreibung

Es wird ein Verfahren zur Ermittlung einer Kippwahrscheinlichkeit eines Fahrzeuges angegeben. Darüber hinaus werden eine Auswerteeinheit und ein System zur Ermittlung einer Kippwahrscheinlichkeit eines Fahrzeuges angegeben. Ferner wird ein Fahrzeug angegeben.

Eine zu lösende Aufgabe besteht darin, ein Verfahren anzugeben, mit dem zuverlässig die Kippwahrscheinlichkeit eines Fahrzeuges ermittelt werden kann. Weitere zu lösende Aufgaben bestehen darin, eine Auswerteeinheit und ein System anzugeben, die ein solches Verfahren ausführen können. Noch eine weitere zu lösende Aufgabe besteht darin, ein Fahrzeug mit einem solchen System anzugeben.

Diese Aufgaben werden unter anderem durch die Gegenstände der Patentansprüche 1, 6, 7 und 8 gelöst. Vorteilhafte Ausgestaltungen und Weiterbildungen sind Gegenstand der abhängigen Patentansprüche.

Die Kippwahrscheinlichkeit kann auch als Kippneigung oder Kipptendenz bezeichnet werden.

Gemäß zumindest einer Ausführungsform umfasst das Verfahren zur Ermittlung einer Kippwahrscheinlichkeit eines Fahrzeuges einen Schritt A), in dem erste Messsignale, die repräsentativ für eine auf eine Achse des Fahrzeuges wirkende Lastverteilung sind, eingelesen werden. Weiter umfasst das Verfahren einen Schritt B), in dem zweite Messsignale, die repräsentativ für einen Neigungswinkel eines Fahrzeugaufbaus des Fahrzeuges sind, eingelesen werden. In einem Schritt C) des Verfahrens wird abhängig von den ersten Messsignalen und den zweiten Messsignalen eine Kippinformation ermittelt, wobei die Kippinformation repräsentativ für eine Wahrscheinlichkeit ist, dass das Fahrzeug kippen wird.

Mit dem Kippen eines Fahrzeuges ist vorliegend insbesondere das seitliche Kippen eines Fahrzeuges gemeint. Ein Fahrzeug weist üblicherweise Führungselemente, wie zum Beispiel Räder oder Kufen, auf, die im bestimmungsgemäßen Betrieb des Fahrzeuges in Kontakt mit einem Boden oder einem Untergrund, insbesondere einer Straße oder einer Schiene, sind. Unter seitlichem Kippen wird verstanden, dass die Auflageelemente entweder auf der in Fahrtrichtung gesehenen linken Seite oder rechten Seite den Kontakt zum Boden oder Untergrund verlieren.

Ein hier beschriebenes Fahrzeug ist bevorzugt ein Kraftfahrzeug, insbesondere ein Nutzfahrzeug, wie ein LKW oder ein Bus, oder ein PKW.

Dass die ersten Messsignale repräsentativ für eine Lastverteilung sind und die zweiten Messsignale repräsentativ für einen Neigungswinkel sind, bedeutet insbesondere, dass die Messsignale entsprechende Informationen tragen, die repräsentativ für eine Lastverteilung oder einen Neigungswinkel sind. Bevorzugt sind die ersten Messsignale auch repräsentativ für eine gesamte auf die Achse wirkende Last.

Unter der auf die Achse wirkenden Lastverteilung wird insbesondere die durch den Fahrzeugaufbau wirkende Kraftverteilung auf die Achse verstanden. Mit "Verteilung" ist dabei gemeint, dass die Last oder Kraft auf die Achse an zumindest zwei entlang einer Längsrichtung der Achse beabstandeten Orten ermittelt wird.

Unter einer Kippwahrscheinlichkeit wird vorliegend die Wahrscheinlichkeit verstanden, dass das Fahrzeug in der unmittelbaren Zukunft kippen wird. Bei einer hohen Kippwahrscheinlichkeit reicht beispielsweise eine kleine Windböe, die seitlich auf das Fahrzeug trifft, um das Fahrzeug zum Kippen zu bringen.

Eine Kippinformation, die repräsentativ für die Kippwahrscheinlichkeit ist, kann beispielsweise eine Kenngröße, zum Beispiel ein Zahlenwert, sein. Die Kenngröße kann die Kippwahrscheinlichkeit zum Beispiel folgendermaßen repräsentieren: Das Fahrzeugt kippt nicht, solange die Kenngröße kleiner oder größer als ein vorgegebener Grenzwert ist. Überschreitet oder Unterschreitet die Kenngröße den vorgegebenen Grenzwert, kippt das Fahrzeugt. Je näher die Kenngröße dem Grenzwert kommt, desto größer ist die Kippwahrscheinlichkeit.

Die Kippinformation kann beispielsweise repräsentativ für ein auf das Fahrzeug wirkendes Drehmoment sein, wobei das wirkende Drehmoment wiederum eine Kippwahrscheinlichkeit wiedergeben oder repräsentieren kann. Dies soll im Folgenden beispielhaft erläutert werden.

Das auf das Fahrzeug wirkende Drehmoment wird zum Beispiel für eine Drehachse des Fahrzeuges betrachtet, um die das Fahrzeug seitlich kippen könnte. Die Drehachse ist dann beispielsweise durch die Berührungspunkte der Führungselemente auf der linken oder rechten Seite des Fahrzeuges definiert.

Das wirkende Drehmoment wird zum einen durch die Gewichtskraft des Fahrzeuges erzeugt. Zum anderen können seitliche Kräfte senkrecht zur Gewichtskraft und senkrecht zur Fahrtrichtung wirken. Die seitlichen Kräfte können beispielsweise durch Wind oder durch eine Zentrifugalbeschleunigung erzeugt werden. Die seitlichen Kräfte haben ebenfalls einen Einfluss auf das Drehmoment. Ferner kann es bei einer Fahrt des Fahrzeuges aufgrund von Unebenheiten des Bodens oder des Untergrunds zu Beschleunigungen entgegen der Gravitationsrichtung kommen, die ebenfalls einen Einfluss auf das Drehmoment haben.

Das Fahrzeug kippt zum Beispiel nicht über eine seiner Seiten, solange das wirkende Drehmoment eine positive Komponente entlang der entsprechenden Drehachse aufweist, da dann das Fahrzeug auf den Untergrund oder Boden gedrückt wird. Ändert das Drehmoment jedoch seine Richtung, sodass die Komponente entlang der Drehachse negativ wird, so kippt das Fahrzeug. Je größer also eine positive Komponente des Drehmoments entlang der Drehachse ist, desto stabiler steht oder fährt das Fahrzeug. Nimmt der positive Wert der Komponente jedoch ab, so kann eine kleine zusätzliche Krafteinwirkung zu einem Richtungswechsel des wirkenden Drehmoments führen, was das Kippen des Fahrzeuges bedeuten würde.

Somit kann also das wirkende Drehmoment, insbesondere eine Komponente des Drehimpulses entlang der Drehachse, die Kippwahrscheinlichkeit wiedergeben oder repräsentieren. Je kleiner ein positiver Wert der Komponente entlang der Drehachse ist, desto höher ist die Kippwahrscheinlichkeit.

Mithilfe von ersten Messgrößen, die repräsentativ für eine Lastverteilung auf eine Achse sind, und mithilfe von zweiten Messgrößen, die repräsentativ für einen Neigungswinkel eines Fahrzeugaufbaus des Fahrzeuges sind, kann beispielsweise eine Kenngröße, die repräsentativ für das wirkende Drehmoment ist, ermittelt werden.

Es versteht sich von selbst, dass es verschiedenste Informationen oder Kenngrößen gibt, die beispielsweise Kräfte oder Beschleunigungen repräsentieren, die sich wiederum eignen, um eine Kippwahrscheinlichkeit des Fahrzeugs zu repräsentieren. Der Fachmann ist im Stande, solche Informationen oder Kenngrößen zu ermitteln.

Der vorliegenden Erfindung liegt insbesondere die Idee zu Grunde, die Kippinformation oder Kenngrößen, die repräsentativ für die Kippwahrscheinlichkeit sind, anhand von ersten Messsignalen, die repräsentativ für eine Lastverteilung auf eine Achse des Fahrzeugs sind, und anhand von zweiten Messsignalen, die repräsentativ für einen Neigungswinkel des Fahrzeugaufbaus des Fahrzeugs, auch Chassis genannt, sind, zu ermitteln. Die Verarbeitung dieser zwei verschiedenen Messsignale erlaubt eine besonders präzise und zuverlässige Bestimmung der Kippwahrscheinlichkeit.

Gemäß zumindest einer Ausführungsform sind die ersten Messsignale Messsignale von einem fahrzeuginternen Wägesystem mit zumindest zwei Wägesensoren. Die zwei Wägesensoren sind bevorzugt einer gemeinsamen Achse des Fahrzeuges zugeordnet. Bevorzugt umfasst das Wägesystem jeweils zwei Wägesensoren auf mehreren Achsen des Fahrzeuges, wobei zur Ermittlung der Kippinformation dann bevorzugt die in den ersten Messsignalen enthaltenen Informationen aller Wägesensoren berücksichtigt werden.

Gemäß zumindest einer Ausführungsform sind die zweiten Messsignale Messsignale eines fahrzeuginternen Neigungswinkelsensors. Der Neigungswinkelsensor kann an oder im Fahrzeugaufbau angeordnet und befestigt sein. Bevorzugt umfassen die zweiten Messsignale Informationen mehrerer fahrzeuginternen Neigungswinkelsensoren, die im Schritt C) alle berücksichtigt werden.

Gemäß zumindest einer Ausführungsform umfasst das Verfahren weiter den Schritt D), in dem ermittelt wird, ob die im Schritt C) ermittelte Kippinformation eine kritische Wahrscheinlichkeit für das Kippen des Fahrzeugs repräsentiert. Die kritische Wahrscheinlichkeit kann vorgegeben sein. Zum Beispiel ist eine kritische Kenngröße vorgegeben. Sobald die Kippinformation die kritische Kenngröße überschreitet oder unterschreitet, ist die kritische Wahrscheinlichkeit für das Kippen des Fahrzeuges erreicht.

Beispielsweise wird hier ein positiver Wertebereich der Komponente des Drehmoments entlang der Drehachse vorgegeben. Repräsentiert die im Schritt C) ermittelte Kippinformation oder Kenngrößen ein Drehmoment mit einer positiven Komponente entlang der Drehachse, wobei der Wert der Komponente innerhalb des vorgegebenen Wertebereichs liegt, so repräsentiert die Kippinformation oder Kenngröße eine kritische Wahrscheinlichkeit.

Gemäß zumindest einer Ausführungsform umfasst das Verfahren einen Schritt E), in dem, falls die im Schritt C) ermittelte Kippinformation eine kritische Wahrscheinlichkeit repräsentiert, eine Steuerung des Fahrzeugs geändert wird und/oder ein Warnsignal ausgegeben wird. Beispielsweise wird das Fahrzeug abgebremst oder eine Lenkung geändert. Wenn ein Warnsignal ausgegeben wird, kann dieses einen Fahrzeugführer auf die Gefahr hinweisen, so dass anschließend der Fahrzeugführer Gegenmaßnahmen ergreifen kann.

Zur Veränderung der Steuerung des Fahrzeugs kann beispielsweise eine fahrzeuginterne Fahrzeugsteuereinheit verwendet werden.

Gemäß zumindest einer Ausführungsform umfasst das Verfahren einen Schritt F), in dem die im Schritt C) ermittelte Kippinformation auf einem Speichermedium gespeichert wird. Das Speichermedium kann ein fahrzeuginternes oder fahrzeugexternes Speichermedium sein.

Die für die Kippwahrscheinlichkeit repräsentative Kippinformation kann mittels einer fahrzeuginternen Auswerteeinheit oder einer fahrzeugexternen Auswerteeinheit ermittelt werden. Wenn die Informationen über eine fahrzeugexterne Auswerteeinheit ermittelt werden, so werden die ersten und zweiten Messsignale beispielsweise kabellos an die externe Auswerteeinheit übermittelt.

Gemäß zumindest einer Ausführungsform umfasst das Verfahren einen Schritt G), in dem die im Schritt C) ermittelte Kippinformation an eine fahrzeugexterne Datenverarbeitungsvorrichtung weitergeleitet wird. Beispielsweise wird die Kippinformation kabellos an die fahrzeugexterne Datenverarbeitungsvorrichtung weitergeleitet.

Darüber hinaus wird eine Auswerteeinheit zur Ermittlung einer Kippwahrscheinlichkeit eines Fahrzeuges angegeben. Die Auswerteeinheit ist insbesondere dazu eingerichtet, ein hier beschriebenes Verfahren durchzuführen. Alle im Zusammenhang mit dem Verfahren offenbarten Merkmale sind daher auch für die Auswerteeinheit offenbart und umgekehrt.

Die Auswerteeinheit umfasst insbesondere einen Prozessor. Weiter kann die Auswerteeinheit Schnittstellen zum Einlesen der ersten und zweiten Messsignale aufweisen. Außerdem kann die Auswerteeinheit eine Schnittstelle zur Ausgabe der Kippinformation aufweisen.

Darüber hinaus wird ein System zur Ermittlung einer Kippwahrscheinlichkeit eines Fahrzeuges angegeben. Das System umfasst insbesondere eine hier beschriebene Auswerteeinheit. Alle im Zusammenhang mit der Auswerteeinheit offenbarten Merkmale sind daher auch für das System offenbart und umgekehrt.

Gemäß zumindest einer Ausführungsform umfasst das System eine hier beschriebene Auswerteeinheit. Ferner umfasst das System ein Wägesystem mit zwei oder mehr Wägesensoren zur Ermittlung der ersten Messsignale. Außerdem umfasst das System einen oder mehrere Neigungswinkelsensoren zur Ermittlung der zweiten Messsignale.

Das System kann ferner eine Fahrzeugsteuereinheit umfassen, die dazu eingerichtet ist, eine Steuerung des Fahrzeugs zu verändern. Ferner kann das System ein Erfassungs- und/oder Aufzeichnungsgerät, zum Beispiel einen digitalen Tachographen, umfassen. Die Auswerteeinheit kann Teil der Fahrzeugsteuereinheit oder des Erfassungs- und/oder Aufzeichnungsgeräts sein.

Darüber hinaus wird ein Fahrzeug angegeben. Das Fahrzeug umfasst insbesondere ein hier beschriebenes System. Alle im Zusammenhang mit dem System offenbarten Merkmale sind daher auch für das Fahrzeug offenbart und umgekehrt.

Gemäß zumindest einer Ausführungsform umfasst das Fahrzeug ein hier beschriebenes System zur Ermittlung einer Kippwahrscheinlichkeit des Fahrzeugs. Ferner umfasst das Fahrzeug eine Achse und einen Fahrzeugaufbau auf der Achse. Zwei Wägesensoren des Wägesystems sind der Achse zugeordnet. Der Neigungswinkelsensor ist an oder in dem Fahrzeugaufbau befestigt.

Dass die zwei Wägesensoren der Achse zugeordnet sind, kann bedeuten, dass die Wägesensoren an oder auf oder in der Achse befestigt sind.

Das Fahrzeug kann mehrere Achsen aufweisen. In diesem Fall kann das Wägesystem jeweils zumindest zwei Wägesensoren für mehrere Achsen umfassen. Alle hier und im Folgenden gemachten Angaben bezüglich der beiden der einen Achse zugeordneten Wägesensoren können auch für mehrere oder alle Wägesensoren gelten, die anderen Achsen zugeordnet sind.

Ferner kann das Fahrzeug mehrere Fahrzeugaufbauten aufweisen. Beispielsweise können den Fahrzeugaufbauten jeweils ein oder mehrere Neigungswinkelsensoren zugeordnet sein.

Gemäß zumindest einer Ausführungsform umfasst das Fahrzeug Kraftübertragungselemente. Im bestimmungsgemäßen Betrieb des Fahrzeuges wird eine Last des Fahrzeugaufbaus über die Kraftübertragungselemente auf die Achse abgeleitet. Zumindest zwei Kraftübertragungselemente sind der Achse zugeordnet.

Die Kraftübertragungselemente sind beispielsweise Federelemente, wie Stoßdämpfer. Beispielsweise ist der Fahrzeugaufbau über genau zwei oder mehr als zwei Kraftübertragungselemente auf der Achse gelagert. Dass eine Kraft über die Kraftübertragungselemente auf die Achse abgeleitet wird, bedeutet insbesondere, dass die Gewichtskraft des Fahrzeugaufbaus auf die Achse abgeleitet wird, dass also die Achse den Fahrzeugaufbau trägt.

Über die Kraftübertragungselemente ist der Fahrzeugaufbau auf der Achse federnd gelagert. Das heißt, der Fahrzeugaufbau ist nicht starr mit der Achse verbunden, sondern kann unabhängig von der Achse gedreht oder geneigt werden, insbesondere um eine Drehachse entlang einer Fahrtrichtung des Fahrzeugs.

Gemäß zumindest einer Ausführungsform ist jeweils zwischen längsseitigen Enden der Achse und dem dem längsseitigen Ende nächstliegenden Kraftübertragungselement ein Wägesensor angeordnet. Anders ausgedrückt sind die Wägesensoren also zwischen den Krafteinleitungspunkten der Achse und den längsseitigen Enden der Achse angeordnet.

Gemäß eines weiteren Aspekts zeichnet sich die Erfindung aus durch ein Computerprogramm, wobei das Computerprogramm ausgebildet ist, das Verfahren zur Ermittlung einer Kippwahrscheinlichkeit eines Fahrzeuges durchzuführen.

Gemäß eines weiteren Aspekts zeichnet sich die Erfindung aus durch ein Computerprogrammprodukt, das einen ausführbaren Programmcode umfasst, wobei der Programmcode bei Ausführung durch eine Datenverarbeitungsvorrichtung das Verfahren zur Ermittlung einer Kippwahrscheinlichkeit eines Fahrzeuges ausführt.

Das Computerprogrammprodukt umfasst insbesondere ein von der Datenverarbeitungsvorrichtung lesbares Medium, auf dem der Programmcode gespeichert ist.

Nachfolgend werden ein hier beschriebenes Verfahren, eine hier beschriebene Auswerteeinheit, ein hier beschriebenes System sowie ein hier beschriebenes Fahrzeug unter Bezugnahme auf Zeichnungen anhand von Ausführungsbeispielen näher erläutert. Gleiche Bezugszeichen geben dabei gleiche Elemente in den einzelnen Figuren an. Es sind dabei jedoch keine maßstäblichen Bezüge dargestellt, vielmehr können einzelne Elemente zum besseren Verständnis übertrieben groß dargestellt sein.

Es zeigen:
Figuren 1A und 1B Ablaufdiagramme von Ausführungsbeispielen des Verfahrens,
Figuren 2A, 2B, 3A, 3B, 3C, 4A, 4B Abwandlungen eines Fahrzeugs in Querschnittsansicht und in verschiedenen Positionen,
Figuren 5A, 5B, 5C ein Ausführungsbeispiel eines Fahrzeugs in Querschnittsansicht und in verschiedenen Positionen,
Figur 6 ein Ausführungsbeispiel eines Fahrzeugs in Draufsicht.

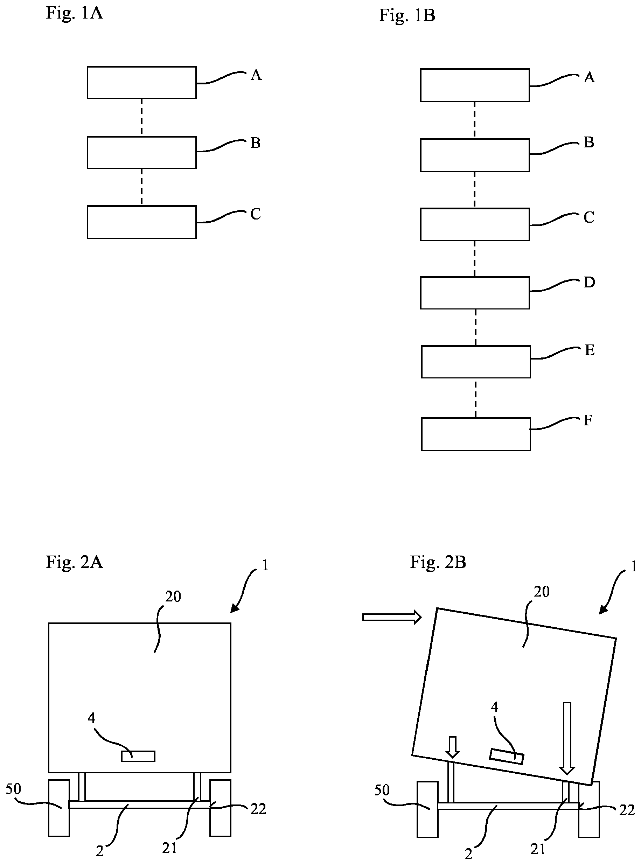

In der Figur 1A ist ein erstes Ausführungsbeispiel des Verfahrens anhand eines Ablaufdiagrammes dargestellt. In einem Schritt A) werden erste Messsignale, die repräsentativ für eine auf eine Achse eines Fahrzeuges wirkende Lastverteilung sind, eingelesen. In einem Schritt B) werden zweite Messsignale, die repräsentativ für einen Neigungswinkel eines Fahrzeugaufbaus des Fahrzeuges sind, eingelesen. In einem Schritt C) wird eine Kippinformation abhängig von den ersten und zweiten Messsignalen ermittelt, wobei die Kippinformation repräsentativ für eine Wahrscheinlichkeit ist, dass das Fahrzeug kippen wird.

In der Figur 1B ist ein zweites Ausführungsbeispiel des Verfahrens anhand eines Ablaufdiagrammes dargestellt. Das Verfahren umfasst wieder die Schritte A), B), C). Nach dem Schritt C) wird ein Schritt D) ausgeführt, in dem ermittelt wird, ob die Kippinformation eine kritische Wahrscheinlichkeit für das Kippen des Fahrzeuges repräsentiert. Falls die Kippinformation die kritische Wahrscheinlichkeit für das Kippen des Fahrzeuges repräsentiert, wird in einem Schritt E) eine Steuerung des Fahrzeuges verändert und/oder es wird ein Warnsignal ausgegeben. Zusätzlich kann in einem optionalen Schritt F) die im Schritt C) ermittelte Kippinformation auf einem Speichermedium gespeichert werden.

In den Figuren 2A und 2B ist eine Abwandlung eines Fahrzeuges in Querschnittsansicht und in verschiedenen Positionen gezeigt. Das Fahrzeug 1 umfasst eine Achse 2, an dessen längsseitigen Enden 22 Räder 50 montiert sind. Ferner umfasst das Fahrzeug 1 einen Fahrzeugaufbau 20, der von der Achse 2 getragen ist. Die durch den Fahrzeugaufbau 20 erzeugte Gewichtskraft wird über Kraftübertragungselemente 21, beispielsweise Federungen oder Stoßdämpfer, auf die Achse 2 und anschließend über die Räder 50 auf die Straße übertragen. An dem Fahrzeugaufbau 20 ist ein Neigungswinkelsensor 4 angebracht. Der Neigungswinkelsensor 4 liefert zweite Messsignale, die repräsentativ für einen Neigungswinkel des Fahrzeugaufbaus 20 sind.

In der Figur 2B ist eine Position des Fahrzeugs 1 der Figur 2A gezeigt, bei dem seitlich auf das Fahrzeug 1 eine Kraft, beispielsweise Wind, wirkt (siehe horizontaler Pfeil). Durch diese seitliche Kraft neigt sich der Fahrzeugaufbau 20. Dadurch kommt es zu einer Veränderung der Lastverteilung auf der Achse 2. Auf der rechten Seite der Achse nimmt die Last zu, auf der linken Seite der Achse 2 nimmt die Last ab. Die Kräfte auf die Achse 2 sind durch die senkrecht verlaufenden Pfeile gekennzeichnet.

Die von dem Neigungswinkelsensor 4 gelieferten zweiten Messsignale tragen Informationen über eine Neigung des Fahrzeugaufbaus 20. Durch das Auswerten dieser Informationen kann ermittelt werden, ob der Fahrzeugaufbau 20 geneigt ist. Entsprechend können Gegenmaßnahmen, zum Beispiel durch Eingreifen in die Fahrzeugsteuerung und Reduzierung der Geschwindigkeit des Fahrzeugs, eingeleitet werden.

Da bei dem vorliegenden System nur Gebrauch von einem Neigungswinkelsensor gemacht wird, kann nicht ohne weiteres ermittelt werden, ob die Neigung des Fahrzeugaufbaus aufgrund der seitlichen Kraft entsteht oder ob die Fahrbahn geneigt ist. Außerdem kann, da hier keine Kräfte gemessen werden, nicht festgestellt werden, ob das Fahrzeug tatsächlich seitlich wegkippt, also Räder den Bodenkontakt verlieren, oder nur der Fahrzeugaufbau geneigt ist. Besonders bei Fahrzeugen mit einem hohen Fahrzeugaufbau kann eine starke Neigung des Fahrzeugaufbaus relativ zur Achse des Fahrzeugs auftreten.

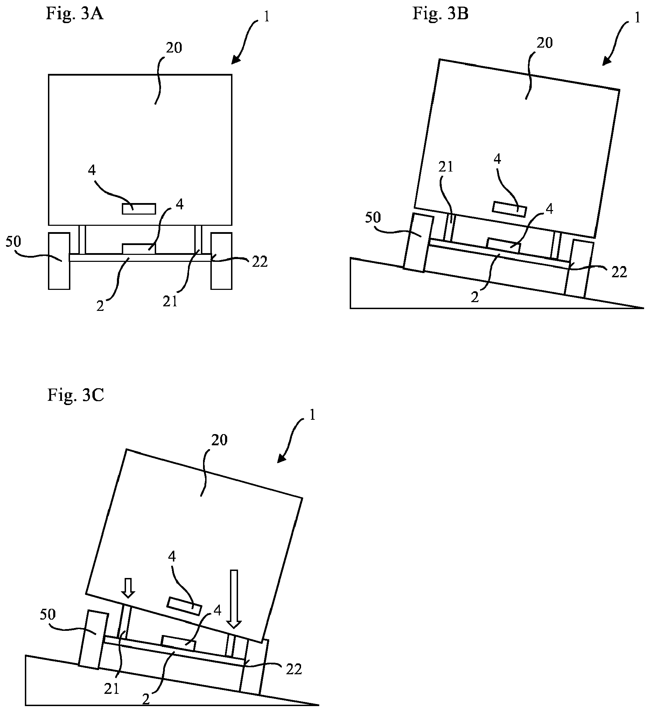

In den Figuren 3A, 3B und 3C ist eine zweite Abwandlung des Fahrzeugs 1 in Querschnittsansicht und in verschiedenen Positionen gezeigt. Im Unterschied zu dem Fahrzeug 1 der Figur 2A umfasst das Fahrzeug 1 nun zwei Neigungswinkelsensoren 4, von denen einer am Fahrzeugaufbau 20 und einer auf der Achse 2 befestigt ist. Dadurch kann anhand dem von den Neigungswinkelsensoren 4 gelieferten zweiten Messsignal der relative Winkel zwischen der Achse 2 und dem Fahrzeugaufbau 20 ermittelt werden. Der erste Neigungswinkelsensor 4 liefert Messsignale, die repräsentativ für die Neigung des Fahrzeugaufbaus 20 sind. Der zweite Neigungswinkelsensor 4 liefert Messsignale, die repräsentativ für den Neigungswinkel der Achse 2 sind.

Auch bei dem in den Figuren 3A bis 3C dargestellten Aufbau ist die Aussagekraft begrenzt, weil nicht tatsächliche Kräfte gemessen werden. Unter Umständen neigt das Fahrzeug aufgrund eines tiefen Schwerpunkts immer noch nicht zum Kippen.

Insgesamt kann durch die alleinige Messung des oder der Neigungswinkel mit einem oder mehreren Neigungswinkelsensoren eine hohe Kippwahrscheinlichkeit erst dann erkannt werden, wenn ein Neigungswinkel tatsächlich überschritten ist oder eine Drehwinkelbeschleunigung festgestellt wird. Somit besteht die Gefahr, dass wertvolle Zeit für das aktive Eingreifen in die Fahrzeugsteuerung vergeht.

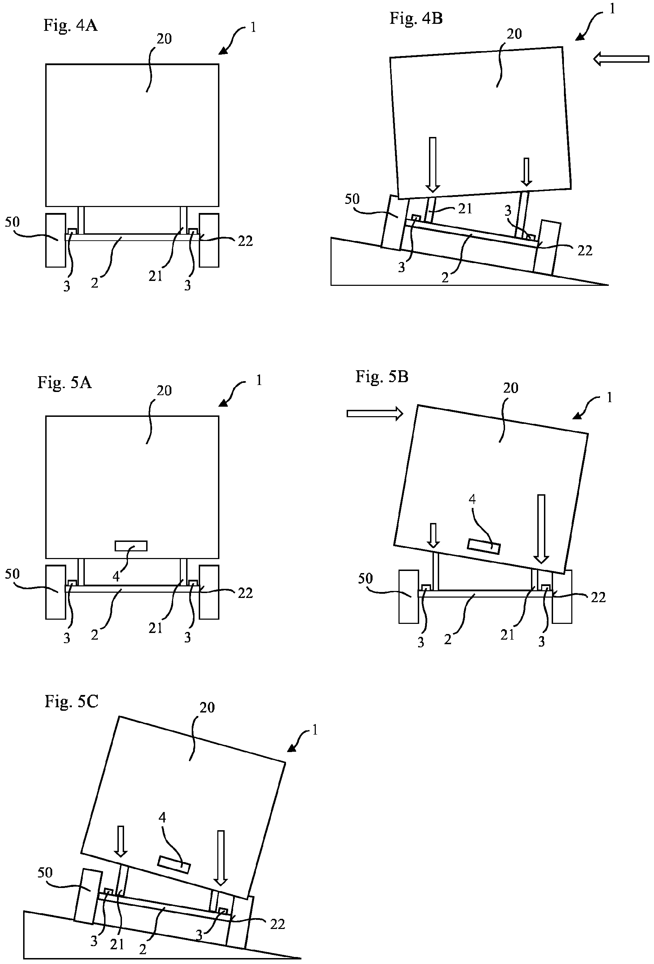

In den Figuren 4A und 4B ist eine weitere Abwandlung eines Fahrzeugs 1 in verschiedenen Positionen gezeigt. In diesem Fall umfasst das Fahrzeug 1 ein Wägesystem mit zwei Wägesensoren 3. Die Wägesensoren 3 sind jeweils zwischen den längsseitigen Enden 22 der Achse 2 und den Kraftübertragungselementen/Federungen 21 angeordnet. Das Fahrzeug 1 verfügt nicht über einen Neigungswinkelsensor in dem Fahrzeugaufbau 20.

Das Wägesystem liefert erste Messsignale, die repräsentativ für eine Lastverteilung auf der Achse 2 sind. Die Wahrscheinlichkeit, dass das Fahrzeug 1 kippt, kann allerdings nicht ausschließlich anhand dieser ersten Messsignale ermittelt werden. Dies ist beispielsweise in der Figur 4B illustriert, bei der das Fahrzeug 1 auf einer schrägen Fahrbahn fährt und gleichzeitig eine Windkraft auf das Fahrzeug 1 wirkt. Allein die Lastverteilung, die beispielsweise anhand der ersten Messwerte ermittelt werden kann, würde auf eine hohe Wahrscheinlichkeit des Kippens des Fahrzeuges 1 hindeuten. Jedoch wirkt die schiefe Fahrbahn dem Kippen entgegen, so dass im vorliegenden Fall tatsächlich nur eine geringe Wahrscheinlichkeit besteht, dass das Fahrzeug 1 kippt.

In den Figuren 5A, 5B, 5C ist ein Ausführungsbeispiel des Fahrzeugs 1 in Querschnittsansicht und in verschiedenen Positionen gezeigt. Das Fahrzeug 1 umfasst einen Neigungswinkelsensor 4 an dem Fahrzeugaufbau 20. Ein Wägesystem umfasst zwei Wägesensoren 3, die derselben Achse 2 zugeordnet sind. Die Wägesensoren 3 sind wiederum jeweils zwischen längsseitigen Enden 22 und den den längsseitigen Enden 22 nächstliegenden Kraftübertragungselementen 21 angeordnet.

Die Wägesensoren 3 liefern erste Messsignale, die repräsentativ für eine Lastverteilung auf der Achse 2 und eine Gesamtlast auf der Achse 2 sind. Der Neigungswinkelsensor 4 liefert zweite Messsignale, die repräsentativ für einen Neigungswinkel des Fahrzeugaufbaus 20 sind. Mittels einer Auswerteeinheit in dem Fahrzeug 1 oder außerhalb des Fahrzeugs 1 kann abhängig von den ersten Messsignalen und zweiten Messsignalen eine Kippinformation ermittelt werden, die repräsentativ für die Wahrscheinlichkeit ist, dass das Fahrzeug 1 kippen wird. Anhand der Kippinformation kann beispielsweise ermittelt werden, ob eine kritische Wahrscheinlichkeit besteht, dass das Fahrzeug kippt. Ist dies der Fall, kann beispielsweise über eine Fahrzeugsteuereinheit aktiv in die Fahrzeugsteuerung eingegriffen werden.

Die Wirkweise ist in den Figuren 5B und 5C beispielhaft veranschaulicht. In der Figur 5B führt eine seitliche Windkraft dazu, dass aufgrund der Hebelwirkung das Fahrzeug auf der linken Seite abzuheben droht. Der Fahrzeugschwerpunkt verschiebt sich hier von der Mitte zur rechten Seite aufgrund der Windkraft. Mithilfe des Neigungswinkelsensors wird erkannt, dass der Fahrzeugaufbau 20 seitlich geneigt ist. Außerdem wird mit den Wägesensoren 3 erkannt, dass die Achse 2 auf der linken Seite entlastet ist und dass auf der rechten Seite eine hohe Achslast wirkt. Somit besteht die Gefahr, dass das Fahrzeug zur rechten Seite kippt.

Es kann nun entschieden werden, ob eine Fahrzeugsteuerungseinheit aktiv in die Fahrzeugsteuerung eingreifen muss oder ob dem Fahrer ein Warnsignal gegeben werden muss oder ob sich das Fahrzeug 1 in einem beherrschbaren Zustand befindet.

In der Figur 5C führt eine seitlich geneigte Fahrbahn dazu, dass aufgrund der Hebelwirkung das Fahrzeug auf der linken Seite abzuheben droht. Auch hier verschiebt sich der Fahrzeugschwerpunkt aufgrund der Neigung von der Mitte zur rechten Seite. Vorliegend liegt der Schwerpunkt des Fahrzeuges hoch, so dass das Fahrzeug seitlich zu kippen droht. Mithilfe des Neigungswinkelsensors 4 wird erkannt, dass sich der Fahrzeugaufbau 20 seitlich neigt. Mittels des Wägesensors 3 wird erkannt, dass die Achse 2 auf der linken Seite entlastet ist und dass auf der rechten Seite der Achse 2 eine hohe Last wirkt. Dadurch besteht die Gefahr, dass das Fahrzeug zur rechten Seite kippt. Wiederum kann dann entschieden werden, ob aktiv in die Fahrzeugsteuerung eingegriffen werden muss oder ob dem Fahrer ein Alarmsignal gegeben werden muss oder ob das Fahrzeug immer noch in einem beherrschbaren Zustand ist.

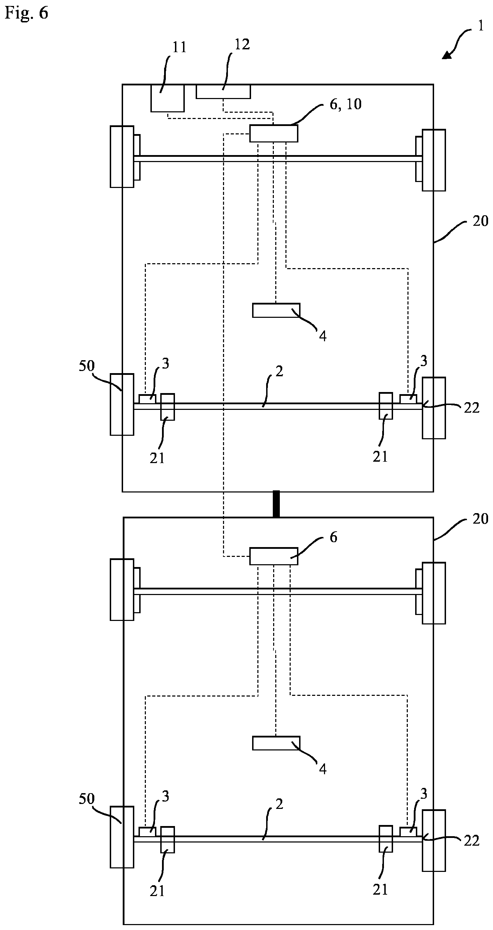

In der Figur 6 ist ein Ausführungsbeispiel des Fahrzeugs 1 in Draufsicht dargestellt. Das Fahrzeug 1 umfasst ein Ausführungsbeispiel eines Systems zur Ermittlung der Kippwahrscheinlichkeit des Fahrzeugs 1. Das System ist in dem Fahrzeug 1 integriert. Das System umfasst vorliegend ein Wägesystem mit vier Wägesensoren 3, zwei Neigungswinkelsensoren 4, eine Auswerteeinheit 10, eine Fahrzeugsteuereinheit 11 und eine Erfassungs- und/oder Aufzeichnungseinheit 12. Außerdem umfasst das System zwei Steuereinheiten 6 (hier: ECU Electrical Control Unit), wobei eines die Auswerteeinheit 10 bildet und ein weiteres zur Weiterleitung der von den Sensoren gelieferten Messsignale eingerichtet ist.

Die Wägesensoren 3 sind auf zwei Achsen 2 des Fahrzeuges 1 angeordnet. Das Fahrzeug 1 umfasst zwei Fahrzeugaufbauten 20, wobei ein Fahrzeugaufbau 20 einer Zugmaschine zugeordnet ist und ein anderer Fahrzeugaufbau 20 einem Anhänger zugeordnet ist. Zwei Wägesensoren 3 sind auf einer Achse der Zugmaschine angeordnet, die beiden übrigen Wägesensoren 3 sind auf einer Achse des Anhängers angeordnet. Jeweils ein Neigungswinkelsensor ist den Fahrzeugaufbauten 20 der Zugmaschine und des Anhängers zugeordnet.

Im Betrieb werden erste Messsignale der Wägesensoren 3 und zweite Messsignale der Neigungswinkelsensoren 4 an die Steuereinheiten 6 geleitet. Eine der Steuerungseinheiten bildet die Auswerteeinheit 10. In der Auswerteeinheit 10 wird anhand der Messsignale eine Kippinformation ermittelt, die repräsentativ für die Wahrscheinlichkeit ist, dass das Fahrzeug 1 kippen wird.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn diese Merkmale oder diese Kombination selbst nicht explizit in den Patentansprüchen oder Ausführungsbeispielen angegeben ist.

## Patentansprüche

1. Verfahren zur Ermittlung einer Kippwahrscheinlichkeit eines Fahrzeuges (1), umfassend die Schritte:
A) Einlesen von ersten Messsignalen, die repräsentativ für eine auf eine Achse (2) des Fahrzeuges (1) wirkende Lastverteilung sind;
B) Einlesen von zweiten Messsignalen, die repräsentativ für einen Neigungswinkel eines Fahrzeugaufbaus (20) des Fahrzeuges (1) sind;
C) Ermitteln einer Kippinformation abhängig von den ersten und zweiten Messsignalen, wobei die Kippinformation repräsentativ für eine Wahrscheinlichkeit ist, dass das Fahrzeug (1) kippen wird.

2. Verfahren nach Anspruch 1, wobei
- die ersten Messsignale Messsignale von einem fahrzeuginternen Wägesystem mit zumindest zwei Wägesensoren (3) sind,
- die zweiten Messsignale Messignale eines fahrzeuginternen Neigungswinkelsensors (4) sind.

3. Verfahren nach Anspruch 1 oder 2, weiter umfassend die Schritte:
D) Ermitteln, ob die im Schritt C) ermittelte Kippinformation eine kritische Wahrscheinlichkeit für das Kippen des Fahrzeuges (1) repräsentiert,
E) Veränderung einer Steuerung des Fahrzeuges (1) und/oder Ausgabe eines Warnsignals, falls die im Schritt C) ermittelte Kippinformation eine kritische Wahrscheinlichkeit für das Kippen des Fahrzeuges (1) repräsentiert.

4. Verfahren nach einem der vorhergehenden Ansprüche, weiter umfassend den Schritt:
F) Speichern der im Schritt C) ermittelten Kippinformation auf einem Speichermedium.

5. Verfahren nach einem der vorhergehenden Ansprüche, weiter umfassend den Schritt:
G) Weiterleiten der im Schritt C) ermittelten Kippinformation an eine fahrzeugexterne Datenverarbeitungsvorrichtung.

6. Auswerteeinheit (10) zur Ermittlung einer Kippwahrscheinlichkeit eines Fahrzeuges (1), die dazu eingerichtet ist, ein Verfahren gemäß einem der vorhergehenden Ansprüche durchzuführen.

7. System zur Ermittlung einer Kippwahrscheinlichkeit eines Fahrzeuges (1), umfassend:
- eine Auswerteeinheit (10) nach Anspruch 6 zur Ermittlung der Kippinformation,
- ein Wägesystem mit zwei Wägesensoren (3) zur Ermittlung der ersten Messsignale,
- einen Neigungswinkelsensor (4) zur Ermittlung der zweiten Messsignale.

8. Fahrzeug (1), umfassend:
- ein System nach Anspruch 7,
- eine Achse (2),
- einen Fahrzeugaufbau (20) auf der Achse (2), wobei
- die zwei Wägesensoren (3) der Achse (2) zugeordnet sind,
- der Neigungswinkelsensor (4) an oder in dem Fahrzeugaufbau (20) befestigt ist.

9. Fahrzeug (1) nach Anspruch 8, weiter umfassend Kraftübertragungselemente (21), wobei
- im bestimmungsgemäßen Betrieb eine Last des Fahrzeugaufbaus (20) über die Kraftübertragungselemente (21) auf die Achse (2) abgeleitet wird,
- jeweils zwischen längsseitigen Enden (22) der Achse (2) und dem dem längsseitigen Ende (22) nächstliegenden Kraftübertragungselement (21) ein Wägesensor (3) angeordnet ist.
